# EUROPEAN PATENT APPLICATION

(11) **EP 4 624 920 A1**
(43) Date of publication of application: **01.10.2025**
(21) Application number: 25163131.3
(22) Date of filing: 12.03.2025
(51) Int. Cl.: G01N 29/24, G01N 21/00, G01N 21/88, G01N 29/04, G01H 9/00

(54) **MEASUREMENT METHOD AND MEASUREMENT SYSTEM FOR CHARACTERIZATION OF MOVING SURFACES BY MEANS OF ELECTROMAGNETIC WAVES**

(30) Priority: 15.03.2024 JP 2024041666
(71) Applicant: Yokogawa Electric Corporation, Tokyo 180-8750 (JP)
(72) Inventor: Okada, Syuhei, Tokyo, 180-8750 (JP)
(74) Representative: Stöckeler, Ferdinand

(57) **Abstract**

The present measurement method includes causing an electromagnetic wave to be incident so as to be reflected a plurality of times between a first surface and a second surface that oppose each other, receiving the electromagnetic wave reflected a plurality of times, analyzing frequency components of a modulation signal of the received electromagnetic wave, and calculating at least one of position, displacement, and speed for at least one of the first surface and the second surface based on the frequency components. At least one of the first surface and the second surface is moving. A state of a surface to be measured is thus measured accurately.

## Description

### CROSS-REFERENCE TO RELATED APPLICATION

The present application claims priority to Japanese Patent Application No. 2024-041666 filed on March 15, 2024, the entire contents of which are incorporated herein by reference.

### TECHNICAL FIELD

The present disclosure relates to a measurement method and a measurement system.

### BACKGROUND

Conventional techniques are known for measuring the state of a certain surface, such as the state of an adhesive surface between a plurality of layers in a sample having a plurality of layers.

For example, patent literature (PTL) 1 discloses a technique of applying vibration to an object to be measured, then causing electromagnetic waves to be incident on the object and measuring the reflected electromagnetic waves to measure the vibration state of the object in order to measure the state of an adhesive surface of the object.

### CITATION LIST

### Patent Literature

PTL 1: WO 2023/080217 A1

### SUMMARY

Demand exists for accurately measuring the state of the surface of the object to be measured.

It is therefore an aim of the present disclosure to provide a measurement method and a measurement system capable of accurately measuring the state of a surface of an object to be measured.

A measurement method according to several embodiments includes causing an electromagnetic wave to be incident so as to be reflected a plurality of times between a first surface and a second surface that oppose each other; receiving the electromagnetic wave reflected a plurality of times; analyzing frequency components of a modulation signal of the received electromagnetic wave; and calculating at least one of position, displacement, and speed for at least one of the first surface and the second surface based on the frequency components, wherein at least one of the first surface and the second surface is moving. According to such a measurement method, the state of a surface of an object to be measured can be measured accurately.

In a measurement method according to an embodiment, at least one of the first surface and the second surface may be vibrating.

A measurement method according to an embodiment may further include calculating a vibration amplitude, based on the frequency components, for the at least one of the first surface and the second surface that is vibrating. This enables calculation of the vibration amplitude.

A measurement method according to an embodiment may further include causing the first surface to vibrate.

In a measurement method according to an embodiment, the second surface may be vibrating in response to vibration of the first surface.

A measurement method according to an embodiment may further include determining a contact state between the second surface and an opposing surface opposite the second surface based on the frequency components. This enables determination of the type of contact state.

In a measurement method according to an embodiment, the contact state may be one of the second surface and the opposing surface being adhered, the second surface and the opposing surface being in contact but not adhered, and the second surface and the opposing surface not being in contact. This enables determination of the type of contact state.

In a measurement method according to an embodiment, the contact state may be determined based on a fundamental frequency component included in the frequency components and a harmonic frequency component included in the frequency components, the fundamental frequency component may be a frequency component of a frequency at which the first surface is vibrating by being caused to vibrate, and the harmonic frequency component may be a frequency component of a harmonic of the fundamental frequency component. This enables determination of the contact state based on the fundamental frequency component and the harmonic frequency component.

In a measurement method according to an embodiment, the contact state may be determined based on a ratio of the fundamental frequency component to the harmonic frequency component. This enables determination of the contact state based on the ratio of the fundamental frequency component to the harmonic frequency component.

A measurement system according to several embodiments includes a generator configured to cause an electromagnetic wave to be incident so as to be reflected a plurality of times between a first surface and a second surface that oppose each other; a receiver configured to receive the electromagnetic wave reflected a plurality of times; a measurement apparatus configured to analyze frequency components of a modulation signal of the received electromagnetic wave; and a control apparatus configured to calculate at least one of position, displacement, and speed for at least one of the first surface and the second surface based on the frequency components, wherein at least one of the first surface and the second surface is moving. According to such a measurement system, the state of a surface of an object to be measured can be measured accurately.

A measurement system according to an embodiment may further include a vibration unit, wherein the first surface is a lower surface of the vibration unit, and the vibration unit is capable of imparting vibration to a first layer in contact with the first surface. This enables the vibration unit to impart vibration to the first layer in contact with the first surface.

In a measurement system according to an embodiment, the vibration unit may be capable of applying a load to the first layer and capable of changing a magnitude of the load. This enables measurement while changing the magnitude of the load.

In a measurement system according to an embodiment, the second surface may be an upper surface of a second layer located below the first layer, and the control apparatus may be configured to determine whether a gap exists between the lower surface of the first layer and the second surface based on the frequency components of the modulation signal analyzed by changing the magnitude of the load. This enables determination of whether a gap exists between the lower surface of the first layer and the second surface by changing the magnitude of the load and performing analysis.

According to the present disclosure, a measurement method and a measurement system capable of accurately measuring the state of a surface of an object to be measured can be provided.

### BRIEF DESCRIPTION OF THE DRAWINGS

In the accompanying drawings:
FIG. 1 is a block diagram illustrating a schematic configuration of a measurement system according to a first embodiment;
FIG. 2 is a diagram illustrating measurement in the measurement system according to the first embodiment;
FIG. 3 is a diagram illustrating an electromagnetic wave traveling in the measurement system according to the first embodiment;
FIG. 4 is a flowchart illustrating operations of the measurement system according to the first embodiment;
FIG. 5 is a block diagram illustrating a schematic configuration of a measurement system according to a second embodiment;
FIG. 6 is a diagram illustrating measurement in the measurement system according to the second embodiment;
FIG. 7 is a diagram illustrating an electromagnetic wave traveling in the measurement system according to the second embodiment;
FIG. 8 is a flowchart illustrating operations of the measurement system according to the second embodiment;
FIG. 9 is a diagram illustrating the existence of a gap between a first layer and a second layer of a sample; and
FIG. 10 is a diagram illustrating application of a load to the sample by the vibration unit.

### DETAILED DESCRIPTION

Embodiments of the present disclosure are described below with reference to the drawings.

### (First Embodiment)

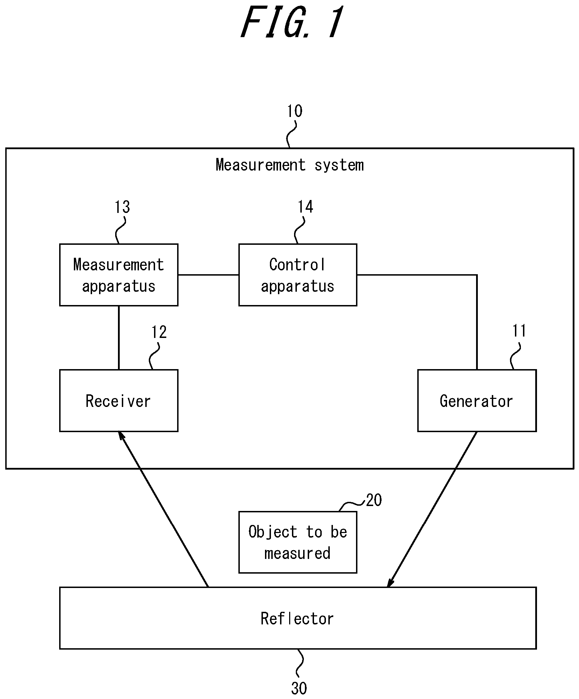

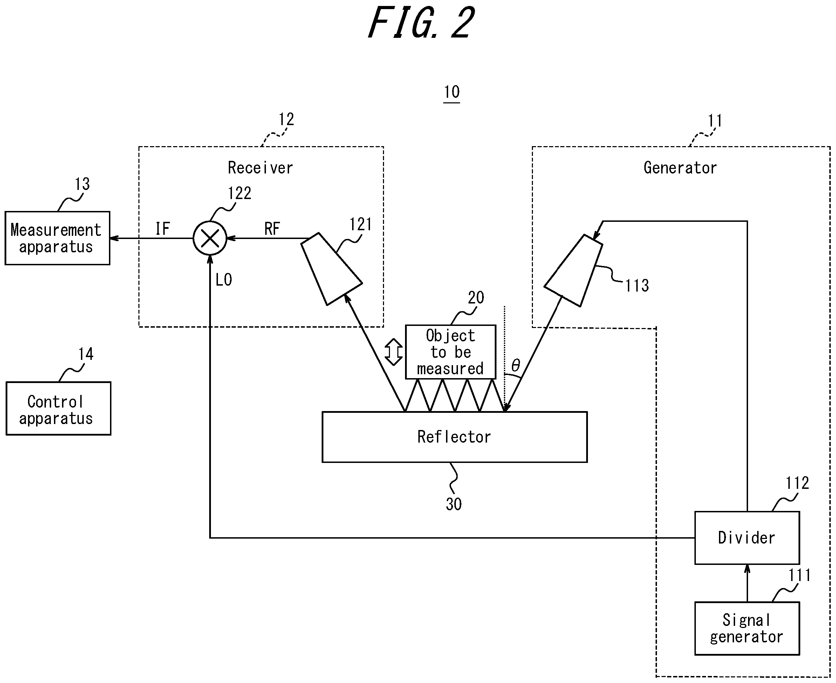

FIG. 1 is a block diagram illustrating a schematic configuration of a measurement system 10 according to a first embodiment. FIG. 2 is a diagram illustrating measurement in the measurement system 10 according to the first embodiment. The configuration and functions of the measurement system 10 according to the first embodiment are described with reference to FIG. 1 and FIG. 2.

The measurement system 10 is an apparatus for causing an electromagnetic wave to be incident between a first surface and a second surface so as to be reflected a plurality of times between the first surface and the second surface, and measuring the state of at least one of the first surface and the second surface based on the frequency components of a modulation signal of the electromagnetic wave reflected a plurality of times between the first surface and the second surface.

The first surface and the second surface are opposing surfaces. In the examples illustrated in FIGS. 1 and 2, the first surface is the lower surface of the object to be measured 20, and the second surface is the upper surface of a reflector 30.

The object to be measured 20 is not particularly limited and may have any shape, such as a cuboid, a cylinder, or the like. The lower surface of the object to be measured 20 is configured by a material capable of reflecting electromagnetic waves. The lower surface of the object to be measured 20 may, for example, be configured by metal.

The reflector 30 is not particularly limited and may have any shape, such as a cuboid, a cylinder, or the like. The upper surface of the reflector 30 is configured by a material capable of reflecting electromagnetic waves. The reflector 30 may, for example, be configured by a material such as metal.

At least one of the first surface and the second surface on which the measurement system 10 causes an electromagnetic wave to be incident is moving. In the first embodiment, a case in which the object to be measured 20 is moving up and down above the reflector 30 is explained as an example. In the first embodiment, the object to be measured 20 is assumed to be vibrating above the reflector 30. Since the object to be measured 20 is vibrating, the lower surface of the object to be measured 20, which is the first surface, is also vibrating.

As illustrated in FIG. 1, the measurement system 10 includes a generator 11, a receiver 12, a measurement apparatus 13, and a control apparatus 14.

The generator 11 causes an electromagnetic wave to be incident between the lower surface of the object to be measured 20 and the upper surface of the reflector 30 so as to be reflected a plurality of times between the lower surface of the object to be measured 20 and the upper surface of the reflector 30.

The generator 11 includes a signal generator 111, a divider 112, and an antenna 113, as illustrated in FIG. 2.

The signal generator 111 is an apparatus capable of generating electromagnetic waves of a predetermined frequency and predetermined amplitude. The signal generator 111 may, for example, generate an electromagnetic wave with a frequency in the sub-terahertz band. The signal generator 111 outputs the generated electromagnetic wave to the divider 112.

The divider 112 divides the electromagnetic wave supplied by the signal generator 111 at a predetermined power ratio. The predetermined power ratio may, for example, be 1:1. The divider 112 outputs one electromagnetic wave divided by the predetermined power ratio to the antenna 113 and outputs the other as an LO signal to a mixer 122 of the receiver 12. The divider 112 may be a divider with any configuration capable of dividing an electromagnetic wave at a predetermined power ratio.

The antenna 113 causes the electromagnetic wave supplied from the divider 112 to be incident between the lower surface of the object to be measured 20 and the upper surface of the reflector 30. At this time, the antenna 113 causes the electromagnetic wave to be incident at a predetermined angle of incidence θ on the upper surface of the reflector 30 so that the electromagnetic wave is reflected a plurality of times between the bottom surface of the object to be measured 20 and the upper surface of the reflector 30. The electromagnetic wave may be reflected between the lower surface of the object to be measured 20 and the upper surface of the reflector 30 any number of times, two or greater. The operator of the measurement system 10 can adjust the number of times the electromagnetic wave is reflected by adjusting the angle of incidence θ. The antenna 113 may be a horn antenna but is not limited to this example.

The receiver 12 receives the electromagnetic wave reflected a plurality of times between the lower surface of the object to be measured 20 and the upper surface of the reflector 30.

The receiver 12 includes an antenna 121 and a mixer 122, as illustrated in FIG. 2.

The antenna 121 receives the electromagnetic wave reflected a plurality of times between the lower surface of the object to be measured 20 and the upper surface of the reflector 30. The antenna 121 outputs the received electromagnetic wave as an RF signal to the mixer 122. The antenna 121 may be a horn antenna but is not limited to this example.

The mixer 122 is supplied with an RF signal from the antenna 121. The mixer 122 is also supplied with an LO signal from the divider 112. The mixer 122 mixes the supplied RF signal and the LO signal to downconvert the RF signal. The mixer 122 outputs an IF signal yielded by downconverting the RF signal to the measurement apparatus 13. The mixer 122 may be a mixer with any configuration.

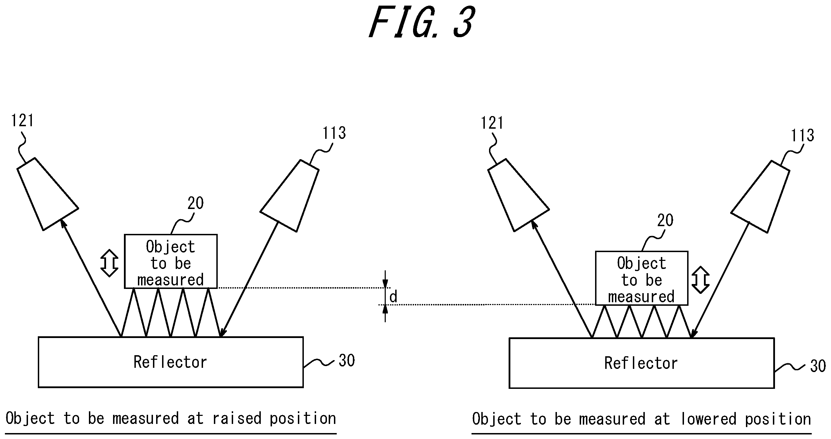

The electromagnetic wave traveling between the lower surface of the object to be measured 20 and the upper surface of the reflector 30 while being reflected a plurality of times is now described with reference to FIG. 3.

In the present embodiment, the object to be measured 20 is vibrating up and down above the reflector 30. The left side of FIG. 3 illustrates the vibrating object to be measured 20 at a raised position. The right side of FIG. 3 illustrates the vibrating object to be measured 20 at a lowered position. As illustrated in FIG. 3, the position of the lower surface of the object to be measured 20 differs by a distance d between the states in which the object to be measured 20 is raised and lowered.

As illustrated in FIG. 3, when the object to be measured 20 vibrates, the path length of the electromagnetic wave that travels while being reflected a plurality of times between the lower surface of the object to be measured 20 and the upper surface of the reflector 30 varies with the frequency at which the object to be measured 20 is vibrating.

The amplitude over which the path length of the electromagnetic wave fluctuates is proportional to the vibration amplitude of the object to be measured 20. The amplitude over which the path length of the electromagnetic wave fluctuates also increases as the number of times the electromagnetic wave is reflected between the lower surface of the object to be measured 20 and the upper surface of the reflector 30 increases.

The electromagnetic wave traveling between the lower surface of the object to be measured 20 and the upper surface of the reflector 30 thus has a fluctuating path length due to the vibration of the object to be measured 20. As a result, the electromagnetic wave received by the antenna 121 becomes a modulated electromagnetic wave.

In this case, the frequency of the modulation signal of the electromagnetic wave received by the antenna 121 includes many frequencies at which the object to be measured 20 is vibrating. In addition, the magnitude of the amplitude of the modulation signal of the electromagnetic wave received by the antenna 121 is proportional to the vibration amplitude of the object to be measured 20 and the number of times the electromagnetic wave is reflected.

Therefore, as the number of times the electromagnetic wave is reflected is greater, the amplitude of the modulation signal of the electromagnetic wave received by the antenna 121 increases, and the measurement system 10 can measure the vibration amplitude of the object to be measured 20 with a high S/N ratio.

The measurement apparatus 13 analyzes the frequency components of the modulation signal of the electromagnetic wave supplied as an IF signal from the mixer 122 of the receiver 12. Here, analyzing the frequency components of the modulation signal of the electromagnetic wave means calculating the magnitude of each frequency component of the modulation signal of the electromagnetic wave.

The measurement apparatus 13 analyzes the frequency components of the modulation signal of the electromagnetic wave supplied from the mixer 122 and outputs the results to the control apparatus 14.

The measurement apparatus 13 may be any apparatus capable of analyzing the frequency components of electromagnetic waves. The measurement apparatus 13 may, for example, be a spectrum analyzer.

The control apparatus 14 may be a general-purpose personal computer (PC) or a dedicated computer that functions as a control apparatus for the measurement system 10. The control apparatus 14 can communicate with the generator 11 and the measurement apparatus 13.

The control apparatus 14 controls the signal generator 111 of the generator 11 to generate an electromagnetic wave of a predetermined frequency and predetermined amplitude.

Upon acquiring the analysis results of the frequency components of the modulation signal of the electromagnetic wave as analyzed by the measurement apparatus 13, the control apparatus 14 calculates the vibration amplitude of the lower surface of the object to be measured 20 based on the acquired frequency components.

The control apparatus 14 calculates the vibration amplitude of the lower surface of the object to be measured 20 based on the magnitude of the frequency component of the vibration frequency of the object to be measured 20, which is included in the frequency components acquired from the measurement apparatus 13.

The control apparatus 14 may display the calculated vibration amplitude of the lower surface of the object to be measured 20 on a display included in the control apparatus 14.

Although FIG. 2 illustrates a configuration in which an electromagnetic wave is supplied directly from the divider 112 to the antenna 113, the generator 11 may include a multiplier between the divider 112 and the antenna 113. The multiplier may, for example, multiply the frequency of the electromagnetic wave supplied from the divider 112 by a factor of 10 and output the result to the antenna 113. In a case in which the generator 11 includes a multiplier, it suffices for the signal generator 111 to output an electromagnetic wave with a frequency that is lower by the magnification factor of the multiplier.

In a case in which the generator 11 includes a multiplier, shortening the distance between the multiplier and the antenna 113 can reduce the effect of dielectric loss on the electromagnetic wave, because the distance over which a high frequency electromagnetic wave is transmitted can be shortened. In this case, if a waveguide instead of a coaxial cable is used for the connection between the multiplier and the antenna 113, the effect of dielectric loss on the electromagnetic wave can be further reduced.

In a case in which the generator 11 includes a multiplier, the receiver 12 also includes a multiplier between the divider 112 and the mixer 122.

In the first embodiment, a case in which the object to be measured 20 is vibrating has been explained as an example, but it suffices for the object to be measured 20 to be in motion.

When the object to be measured 20 is moving, the control apparatus 14 can calculate at least one of the position, displacement, and speed of the lower surface of the object to be measured 20 based on the frequency components of the modulation signal acquired from the measurement apparatus 13. In this case, as the electromagnetic wave is reflected more times, the modulation signal acquired from the measurement apparatus 13 fluctuates significantly depending on the position, displacement, and speed of the lower surface of the object to be measured 20. Therefore, the measurement system 10 can accurately measure at least one of the position, displacement, and speed of the lower surface of the object to be measured 20 with a high S/N ratio by causing the electromagnetic wave to reflect a plurality of times.

In a case in which the object to be measured 20 is vibrating, the control apparatus 14 can calculate the vibration amplitude of the lower surface of the object to be measured 20 as the displacement of the lower surface of the object to be measured 20.

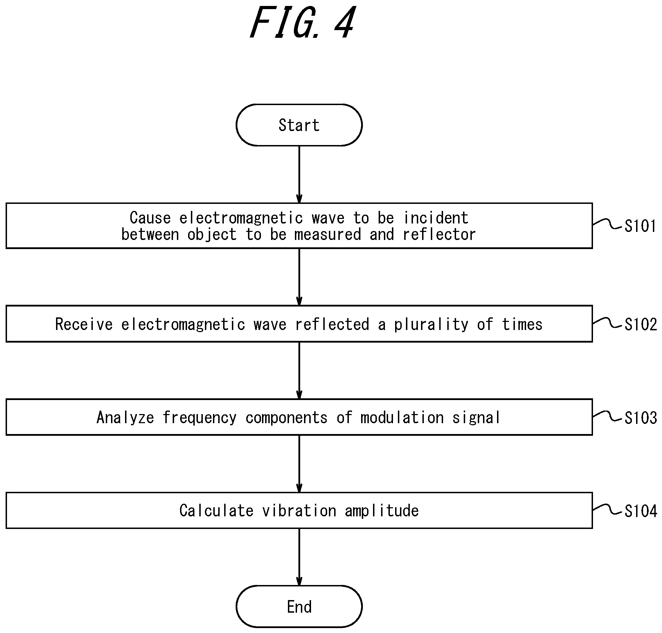

Operations of the measurement system 10 according to the first embodiment are described with reference to the flowchart illustrated in FIG. 4.

The generator 11 causes an electromagnetic wave to be incident between the lower surface of the object to be measured 20 and the upper surface of the reflector 30 so as to be reflected a plurality of times between the lower surface of the object to be measured 20 and the upper surface of the reflector 30 (step S101).

The receiver 12 receives the electromagnetic wave reflected a plurality of times between the lower surface of the object to be measured 20 and the upper surface of the reflector 30 (step S102).

The measurement apparatus 13 analyzes the frequency components of the modulation signal of the electromagnetic wave supplied as an IF signal from the mixer 122 of the receiver 12 (step S103).

The control apparatus 14 calculates the vibration amplitude of the lower surface of the object to be measured 20 based on the magnitude of the frequency component of the vibration frequency of the object to be measured 20, which is included in the frequency components acquired from the measurement apparatus 13 (step S104).

According to the above-described measurement system 10 of the first embodiment, the state of the surface of the object to be measured can be measured with high accuracy. More specifically, the measurement system 10 uses the generator 11 to cause an electromagnetic wave to be incident so as to be reflected a plurality of times between the lower surface of the object to be measured 20, which is a first surface, and the upper surface of the reflector 30, which is a second surface, uses the receiver 12 to receive the electromagnetic wave reflected a plurality of times, and uses the measurement apparatus 13 to analyze frequency components of a modulation signal of the received electromagnetic wave. The control apparatus 14 of the measurement system 10 then calculates at least one of the position, displacement, and speed of the lower surface of the object to be measured 20 based on the frequency components of the modulation signal analyzed by the measurement apparatus 13. Since the state of the lower surface of the object to be measured 20 is thus calculated by analyzing the frequency components of the modulation signal of the electromagnetic wave reflected a plurality of times, the measurement system 10 according to the first embodiment can accurately measure the state of the lower surface of the object to be measured 20.

### (Second Embodiment)

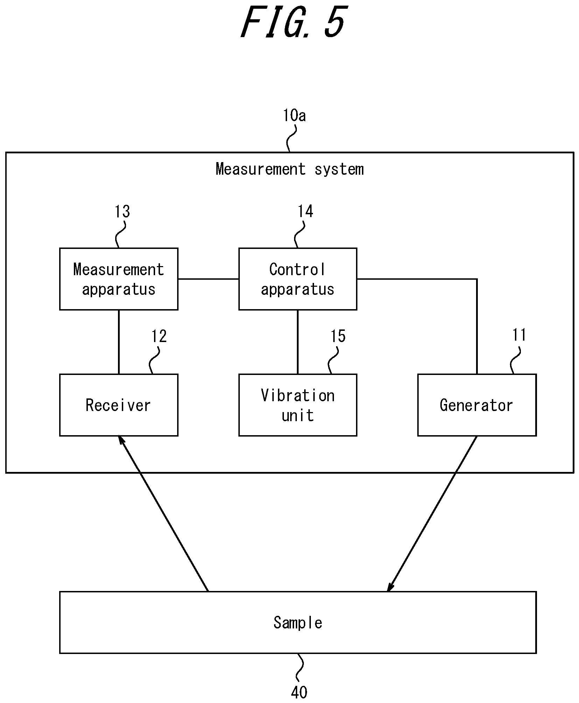

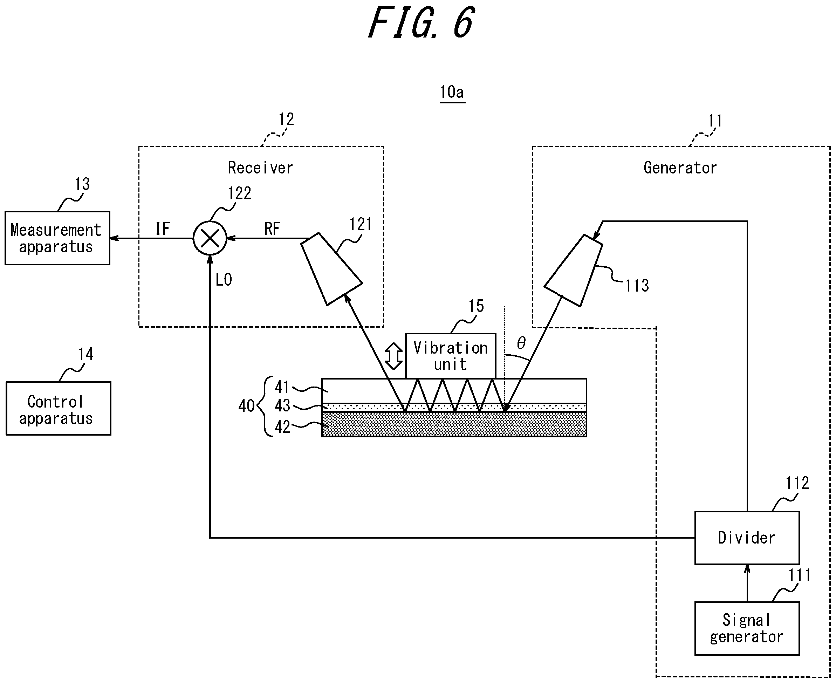

FIG. 5 is a block diagram illustrating a schematic configuration of a measurement system 10a according to a second embodiment. FIG. 6 is a diagram illustrating measurement in the measurement system 10a according to the second embodiment. The configuration and functions of the measurement system 10a according to the second embodiment are described with reference to FIG. 5 and FIG. 6.

The measurement system 10a according to the second embodiment will be described mainly in terms of differences from the measurement system 10 according to the first embodiment, and a description of points that are the same as or similar to the measurement system 10 according to the first embodiment will be omitted as appropriate.

As illustrated in FIG. 5, the measurement system 10a according to the second embodiment includes a generator 11, a receiver 12, a measurement apparatus 13, a control apparatus 14, and a vibration unit 15. The measurement system 10a according to the second embodiment differs from the measurement system 10 according to the first embodiment mainly by inclusion of the vibration unit 15.

The measurement system 10a according to the second embodiment also causes an electromagnetic wave to be incident between the first surface and second surface so as to be reflected a plurality of times between the first surface and second surface.

In the second embodiment, the first surface is the lower surface of the vibration unit 15 and the second surface is the upper surface of a second layer 42 of a sample 40. The second layer 42 of the sample 40 is illustrated in FIG. 6.

The vibration unit 15 is an apparatus capable of applying vibration to the sample 40. The vibration unit 15 may be any apparatus capable of applying vibration to the sample 40, such as an ultrasonic horn. In a case in which the vibration unit 15 is an ultrasonic horn, the vibration unit 15 can apply ultrasonic vibration to the sample 40. The vibration unit 15 applies vibration to the sample 40 at a predetermined frequency and a predetermined amplitude.

The vibration unit 15 is used in a state such that the vibration unit 15 is pressed against the sample 40, as illustrated in FIG. 6. The vibration unit 15 can apply vibration to the sample 40 while pressed against the sample 40.

The lower surface of the vibration unit 15 is configured by a material capable of reflecting electromagnetic waves. The lower surface of the vibration unit 15 may, for example, be configured by a material such as metal.

The sample 40 includes a first layer 41, a second layer 42, and a third layer 43, as illustrated in FIG. 6.

The first layer 41 is a layer through which electromagnetic waves can be transmitted. The first layer 41 is configured by a material through which electromagnetic waves can be transmitted. The first layer 41 may, for example, be configured by a polymer, an inorganic material, or the like.

The second layer 42 is a layer capable of reflecting electromagnetic waves. The second layer 42 is configured by a material that has high reflective properties and is capable of reflecting electromagnetic waves. The second layer 42 may, for example, be configured by a metal.

The third layer 43 is a layer that adheres the first layer 41 to the second layer 42. The third layer 43 is configured by a material through which electromagnetic waves can be transmitted. The third layer 43 may, for example, be configured by an adhesive made of a polymer, inorganic material, or other such material.

The sample 40 need not include the third layer 43. In this case, the first layer 41 and the second layer 42 may be directly adhered by a micro-anchor effect.

The measurement system 10a vibrates the vibration unit 15 at a predetermined frequency and predetermined amplitude while the vibration unit 15 is pressed against the first layer 41 of the sample 40. This vibrates the lower surface of the vibration unit 15, which is the first surface, and in response, the upper surface of the second layer 42, which is the second surface, vibrates.

With the vibration unit 15 vibrating, the antenna 113 of the generator 11 causes the electromagnetic wave supplied by the divider 112 to be incident between the lower surface of the vibration unit 15 and the upper surface of the second layer 42 of the sample 40. At this time, the antenna 113 causes the electromagnetic wave to be incident at a predetermined angle of incidence θ on the upper surface of the second layer 42 of the sample 40 so that the electromagnetic wave is reflected a plurality of times between the bottom surface of the vibration unit 15 and the upper surface of the second layer 42.

The antenna 121 of the receiver 12 receives the electromagnetic wave reflected a plurality of times between the lower surface of the vibration unit 15 and the upper surface of the second layer 42 of the sample 40.

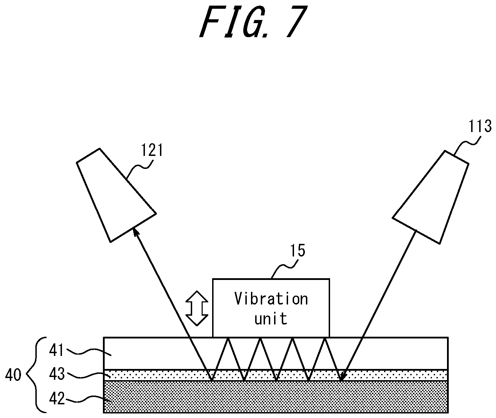

The electromagnetic wave traveling between the lower surface of the vibration unit 15 and the upper surface of the second layer 42 of the sample 40 while being reflected a plurality of times is now described with reference to FIG. 7.

In the sample 40, the electromagnetic wave is transmitted through the first layer 41 and the third layer 43 and is therefore reflected by the upper surface of the second layer 42.

The electromagnetic wave reflected by the upper surface of the second layer 42 is again transmitted through the third layer 43 and the first layer 41 and is reflected by the lower surface of the vibration unit 15. Subsequently, the electromagnetic wave is reflected a plurality of times by the upper surface of the second layer 42 and the lower surface of the vibration unit 15 and is received by the antenna 121.

Upon vibration of the vibration unit 15, the upper surface of the second layer 42 also vibrates in response to the lower surface of the vibration unit 15. At this time, the upper surface of the second layer 42 vibrates differently depending on the contact state between the first layer 41 and the second layer 42.

When the first layer 41 and the second layer 42 are well adhered, the upper surface of the second layer 42 vibrates almost synchronously with the lower surface of the vibration unit 15. When the first layer 41 and the second layer 42 are in contact but not adhered, the upper surface of the second layer 42 vibrates asynchronously with the lower surface of the vibration unit 15. Also when a gap exists between the first layer 41 and the second layer 42, so that the first layer 41 and the second layer 42 are not in contact, the upper surface of the second layer 42 vibrates asynchronously with the lower surface of the vibration unit 15. When the first layer 41 and the second layer 42 are not in contact, the degree of asynchrony is greater than when the first layer 41 and the second layer 42 are in contact but not adhered.

Upon vibration of the vibration unit 15, the path length of the electromagnetic wave traveling between the lower surface of the vibration unit 15 and the upper surface of the second layer 42 of the sample 40 fluctuates. When the first layer 41 and the second layer 42 are well adhered, the path length of the electromagnetic wave fluctuates mainly at the fundamental frequency, which is the frequency at which the vibration unit 15 is vibrating. When the first layer 41 and the second layer 42 are in contact but not adhered, and when the first layer 41 and the second layer 42 are not in contact, vibration occurs not only at the fundamental frequency but also at frequencies that are harmonics of the fundamental frequency.

At this time, the amplitude over which the path length of the electromagnetic wave fluctuates also increases as the number of times the electromagnetic wave is reflected between the lower surface of the vibration unit 15 and the upper surface of the second layer 42 of the sample 40 increases. Therefore, as the number of times the electromagnetic wave is reflected is greater, the amplitude of the modulation signal of the electromagnetic wave received by the antenna 121 increases, and the measurement system 10a can measure the vibration amplitude with a high S/N ratio.

The amplitude of the modulation signal of the electromagnetic wave depends on the vibration amplitude of the lower surface of the vibration unit 15 and the vibration amplitude of the upper surface of the second layer 42 of the sample 40, but since the vibration amplitude of the lower surface of the vibration unit 15 is known, the vibration amplitude of the upper surface of the second layer 42 of the sample 40 can be calculated by subtracting the vibration amplitude of the lower surface of the vibration unit 15.

The measurement apparatus 13 analyzes the frequency components of the modulation signal of the electromagnetic wave supplied as an IF signal from the mixer 122 of the receiver 12. The measurement apparatus 13 outputs the result of analyzing the frequency components of the modulation signal of the electromagnetic wave supplied from the mixer 122 to the control apparatus 14.

Upon acquiring the analysis results of the frequency components of the modulation signal of the electromagnetic wave as analyzed by the measurement apparatus 13, the control apparatus 14 calculates the vibration amplitude of the upper surface of the second layer 42 of the sample 40 based on the acquired frequency components.

Also, upon acquiring the analysis results of the frequency components of the modulation signal of the electromagnetic wave as analyzed by the measurement apparatus 13, the control apparatus 14 determines the contact state between the lower surface of the first layer 41, which is opposite the upper surface of the second layer 42, and the upper surface of the second layer 42 based on the acquired frequency components.

The control apparatus 14 may determine which of the following conditions is the contact state between the lower surface of the first layer 41 and the upper surface of the second layer 42.
· The lower surface of the first layer 41 and the upper surface of the second layer 42 are adhered.
· The lower surface of the first layer 41 and the upper surface of the second layer 42 are in contact but not adhered.
· The lower surface of the first layer 41 and the upper surface of the second layer 42 are not in contact.

The control apparatus 14 may determine the contact state based on the fundamental frequency component included in the acquired frequency components and the harmonic frequency component included in the acquired frequency components. Here, the fundamental frequency component is the frequency component of the frequency at which the vibration unit 15 is vibrating. The harmonic frequency represents is the frequency components of harmonics of the fundamental frequency component.

For example, in a case in which the vibration unit is vibrating at 35 kHz, the fundamental frequency component is the frequency component of 35 kHz. The harmonic frequency component is the sum of the frequency components of 70 kHz, 105 kHz, and the like, which are harmonics of 35 kHz.

The control apparatus 14 may determine the contact state between the lower surface of the first layer 41 and the upper surface of the second layer 42 based on the ratio between the fundamental frequency component included in the acquired frequency components and the harmonic frequency component included in the acquired frequency components.

For example, when the lower surface of the first layer 41 and the upper surface of the second layer 42 are adhered, the ratio of the harmonic frequency component to the fundamental frequency component is small. When the lower surface of the first layer 41 and the upper surface of the second layer 42 are in contact but not adhered, the ratio of the harmonic frequency component to the fundamental frequency component is larger than when the lower surface of the first layer 41 and the upper surface of the second layer 42 are adhered. When the lower surface of the first layer 41 and the upper surface of the second layer 42 are not in contact, either the ratio of the harmonic frequency component to the fundamental frequency component is the same as when the lower surface of the first layer 41 and the upper surface of the second layer 42 are in contact but not adhered, or only the fundamental frequency component is detected. For example, in a case in which a large gap exists between the lower surface of the first layer 41 and the upper surface of the second layer 42 when the lower surface of the first layer 41 and the upper surface of the second layer 42 are not in contact, the vibration of the lower surface of the first layer 41 is not transmitted to the upper surface of the second layer 42. Therefore, depending on the conditions of the load of the vibration unit 15, only the fundamental frequency component, which is the vibration frequency component of the vibration unit 15, is detected.

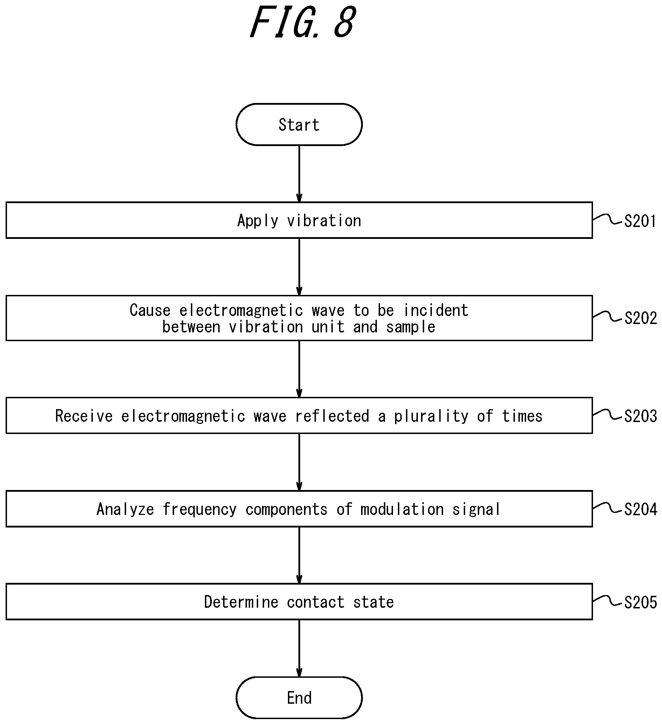

Operations of the measurement system 10a according to the second embodiment are described with reference to the flowchart illustrated in FIG. 8.

The vibration unit 15 applies vibration to the sample 40 at a predetermined frequency and a predetermined amplitude (step S201).

The generator 11 causes an electromagnetic wave to be incident between the lower surface of the vibration unit 15 and the upper surface of the second layer 42 of the sample 40 so as to be reflected a plurality of times between the lower surface of the vibration unit 15 and the upper surface of the second layer 42 of the sample 40 (step S202).

The receiver 12 receives the electromagnetic wave reflected a plurality of times between the lower surface of the vibration unit 15 and the upper surface of the second layer 42 of the sample 40 (step S203).

The measurement apparatus 13 analyzes the frequency components of the modulation signal of the electromagnetic wave supplied as an IF signal from the mixer 122 of the receiver 12 (step S204).

Based on the frequency components acquired from the measurement apparatus 13, the control apparatus 14 calculates the vibration amplitude of the upper surface of the second layer 42. The control apparatus 14 also determines the contact state between the lower surface of the first layer 41 and the upper surface of the second layer 42 based on the frequency components acquired from the measurement apparatus 13 (step S205).

According to the above-described measurement system 10a of the second embodiment, the state of the surface of the object to be measured can be measured with high accuracy. More specifically, the measurement system 10a uses the generator 11 to cause an electromagnetic wave to be incident so as to be reflected a plurality of times between the lower surface of the vibration unit 15, which is a first surface, and the upper surface of the second layer 42 of the sample 40, which is a second surface, uses the receiver 12 to receive the electromagnetic wave reflected a plurality of times, and uses the measurement apparatus 13 to analyze frequency components of a modulation signal of the received electromagnetic wave. The control apparatus 14 of the measurement system 10a then calculates the vibration amplitude of the upper surface of the second layer 42 based on the frequency components of the modulation signal analyzed by the measurement apparatus 13. Since the vibration amplitude of the upper surface of the second layer 42 is thus calculated by analyzing the frequency components of the modulation signal of the electromagnetic wave reflected a plurality of times, the measurement system 10a according to the second embodiment can accurately measure the state of the upper surface of the second layer 42.

### <Imparting of load to sample by vibration unit>

The vibration unit 15 may be capable of applying a load to the first layer 41 of the sample 40. When applying the load, the vibration unit 15 may be capable of changing the magnitude of the load applied to the sample 40.

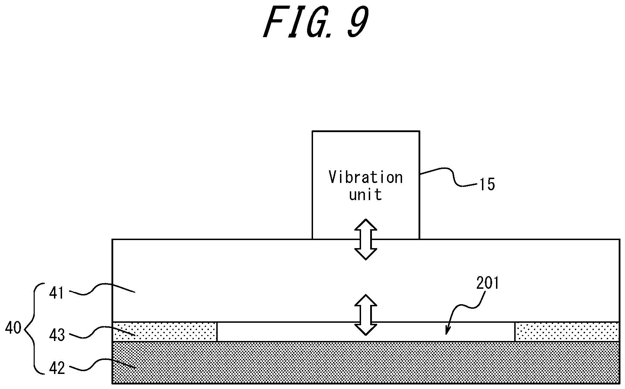

FIG. 9 illustrates an example of a configuration in a case in which the third layer 43 has a gap 201. In such a case, when the load applied by the vibration unit 15 to the first layer 41 is small, the first layer 41 and the second layer 42 are not in contact due to the gap 201.

In this case, the upper surface of the second layer 42 hardly vibrates, because the vibration applied to the first layer 41 by the vibration unit 15 is not transmitted to the second layer 42.

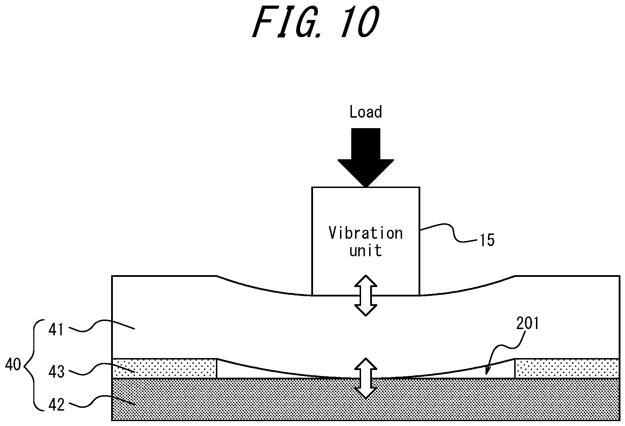

FIG. 10 illustrates contact between the lower surface of the first layer 41 and the upper surface of the second layer 42 due to an increased load applied to the first layer 41 by the vibration unit 15.

In this case, the upper surface of the second layer 42 vibrates, because the vibration applied to the first layer 41 by the vibration unit 15 is transmitted to the second layer 42.

The state of vibration of the upper surface of the second layer 42 thus differs depending on whether the lower surface of the first layer 41 and the upper surface of the second layer 42 are in contact.

The measurement apparatus 13 analyzes the frequency components of the modulation signal of the electromagnetic wave supplied as an IF signal from the mixer 122 of the receiver 12, but the frequency components of the modulation signal of the electromagnetic wave vary according to the state of vibration of the upper surface of the second layer 42.

Accordingly, if the acquired frequency components change significantly at a certain point in time while the vibration unit 15 is progressively changing the load applied to the first layer 41, this means that a gap exists between the lower surface of the first layer 41 and the upper surface of the second layer 42. The control apparatus 14 can determine that a gap exists between the lower surface of the first layer 41 and the upper surface of the second layer 42 upon a significant change in the acquired frequency components at a certain point in time while the vibration unit 15 is progressively changing the load applied to the first layer 41.

### <Size of vibration unit>

When the measurement system 10a according to the second embodiment measures the state of the upper surface of the second layer 42 of the sample 40, the resolution of the area in the measurement range of the upper surface of the second layer 42 depends on the area of the vibration unit 15.

Although the resolution is lower when the area of the vibration unit 15 is large, the entire sample 40 can be measured with fewer measurements in a case in which the entire sample 40 is measured while changing the position of the vibration unit 15.

The resolution is higher when the area of the vibration unit 15 is small, but the number of measurements needs to be increased to measure the entire sample 40 in a case in which the entire sample 40 is measured while changing the position of the vibration unit 15.

The area of the vibration unit 15 may be determined appropriately according to the required resolution.

It will be clear to a person of ordinary skill in the art that the present disclosure may be implemented in certain ways other than the above embodiments without departing from the spirit or essential features thereof. Accordingly, the above explanation merely provides examples that are in no way limiting. The scope of the present disclosure is to be defined by the appended claims, not by the above explanation. Among all changes, various changes that are within the range of equivalents are included therein.

For example, the arrangement, number, and the like of the above-described components are not limited to the above explanation or the drawings. The arrangement, number, and the like of each component may be selected freely as long as the functions of the component can be achieved.

For example, the case in which the generator 11 causes an electromagnetic wave to be incident and reflected a plurality of times between the first surface and the second surface has been described as an example, but the generator 11 may cause a sound wave to be incident instead of an electromagnetic wave.

For example, in the configuration illustrated in the above embodiment, the receiver 12 includes the mixer 122, but the receiver 12 need not include the mixer 122. In this case, the receiver 12 may output the RF signal to the measurement apparatus 13 without downconverting. The measurement apparatus 13 may also analyze the frequency components of the modulation signal of the electromagnetic wave based on an electromagnetic wave supplied as the RF signal in this case.

For example, some processing operations performed in the control apparatus 14 in the above embodiment may be performed in the measurement apparatus 13.

For example, in the above embodiment, the measurement apparatus 13 and the control apparatus 14 have been described as independent apparatuses, but the measurement apparatus 13 and the control apparatus 14 may be an integrated apparatus.

## Claims

1. A measurement method comprising:
causing an electromagnetic wave to be incident so as to be reflected a plurality of times between a first surface and a second surface that oppose each other;
receiving the electromagnetic wave reflected a plurality of times;
analyzing frequency components of a modulation signal of the received electromagnetic wave; and
calculating at least one of position, displacement, and speed for at least one of the first surface and the second surface based on the frequency components, wherein
at least one of the first surface and the second surface is moving.

2. The measurement method according to claim 1, wherein at least one of the first surface and the second surface is vibrating.

3. The measurement method according to claim 2, further comprising calculating a vibration amplitude, based on the frequency components, for the at least one of the first surface and the second surface that is vibrating.

4. The measurement method according to claim 2, further comprising causing the first surface to vibrate.

5. The measurement method according to claim 4, wherein the second surface is vibrating in response to vibration of the first surface.

6. The measurement method according to claim 5, further comprising determining a contact state between the second surface and an opposing surface opposite the second surface based on the frequency components.

7. The measurement method according to claim 6, wherein the contact state is one of the second surface and the opposing surface being adhered, the second surface and the opposing surface being in contact but not adhered, and the second surface and the opposing surface not being in contact.

8. The measurement method according to claim 6, wherein
the contact state is determined based on a fundamental frequency component included in the frequency components and a harmonic frequency component included in the frequency components,
the fundamental frequency component is a frequency component of a frequency at which the first surface is vibrating by being caused to vibrate, and
the harmonic frequency component is a frequency component of a harmonic of the fundamental frequency component.

9. The measurement method according to claim 8, wherein the contact state is determined based on a ratio of the fundamental frequency component to the harmonic frequency component.

10. A measurement system comprising:
a generator configured to cause an electromagnetic wave to be incident so as to be reflected a plurality of times between a first surface and a second surface that oppose each other;
a receiver configured to receive the electromagnetic wave reflected a plurality of times;
a measurement apparatus configured to analyze frequency components of a modulation signal of the received electromagnetic wave; and
a control apparatus configured to calculate at least one of position, displacement, and speed for at least one of the first surface and the second surface based on the frequency components, wherein
at least one of the first surface and the second surface is moving.

11. The measurement system according to claim 10, further comprising a vibration unit, wherein
the first surface is a lower surface of the vibration unit, and
the vibration unit is capable of imparting vibration to a first layer in contact with the first surface.

12. The measurement system according to claim 11, wherein the vibration unit is
capable of applying a load to the first layer, and
capable of changing a magnitude of the load.

13. The measurement system according to claim 12, wherein
the second surface is an upper surface of a second layer located below the first layer, and
the control apparatus is configured to determine whether a gap exists between the lower surface of the first layer and the second surface based on the frequency components of the modulation signal analyzed by changing the magnitude of the load.
